# EUROPÄISCHE PATENTSCHRIFT

(11) **EP 2 784 464 B1**
(45) Veröffentlichungstag und Bekanntmachung des Hinweises auf die Patenterteilung: **27.07.2016**
(21) Anmeldenummer: 13160908.3
(22) Anmeldetag: 25.03.2013
(51) Int. Cl.: G01L 19/08

(54) **Vorrichtung zur Erfassung von Drücken in einer Fluidleitung**
Pressure-sensing device in a fluid line
Dispositif d'enregistrement de pressions dans une conduite de fluide

(43) Veröffentlichungstag der Anmeldung: 01.10.2014
(73) Patentinhaber: WALTER STAUFFENBERG GMBH & CO. KG, 58791 Werdohl (DE)
(72) Erfinder: König, Ulrich, 58849 Herscheid (DE); Thamer, Stefan, 58840 Plettenberg (DE); Wagner, Oliver, 58644 Iserlohn (DE)
(74) Vertreter: Patentanwälte Dörner & Kötter PartG mbB

(56) Entgegenhaltungen:
- WO-A1-2010/069707
- DE-A1-102011 077 868
- BOOM VAN DEN T: "INTEGRIERTER DRUCKSENSOR WIRD DRAHTLOS VERSORGT", ELEKTRONIK, IRL PRESS LIMITED, DE, Bd. 49, Nr. 7, 4. April 2000 (2000-04-04), Seite 54, XP000959790, ISSN: 0013-5658

## Beschreibung

Die Erfindung betrifft eine Vorrichtung zur Erfassung von Drücken in einer Fluidleitung, insbesondere einer Hydraulikleitung nach dem Patentanspruch 1.

Zur Erfassung von Drücken an Druckleitungen werden regelmäßig Messkupplungen eingesetzt, die fest an der Druckleitung eines Hydraulik- oder Pneumatiksystems angeschraubt sind. Zur Durchführung von Messungen wird auf die Kupplungsbuchse der Messkupplung ein Dichtnippel mittels einer Überwurfmutter aufgeschraubt, der fest mit einem Schlauch verbunden ist. Die Kupplungen können unter Druck, ohne die entsprechende Anlage still zusetzen, über Messschläuche mit einem entsprechenden Messgerät verbunden werden. Beim Anschluss fest installierter Geräte, wie beispielsweise Manometern, können die flexiblen Messschläuche einfach verlegt werden, sodass eine aufwendige Rohrverlegung entfällt. Mit derartigen Messkupplungen lassen sich die effektiven Arbeitsdrücke direkt am Hydraulikgerät messen, wobei kein Lösen von Entlüftungsschrauben oder Rohrverschraubungen erforderlich ist. Messkupplungen der vorgenannten Art sind beispielsweise aus der DE 43 03 366 C2 bekannt.

Nachteilig an den vorbekannten Messkupplungen ist, dass die Durchführung von Druckmessungen sich als aufwendig gestaltet, da die entsprechenden Messgeräte vor der Durchführung der Messung zunächst mit der Messkupplung verbunden werden müssen. Dieser Aufwand entfällt bei stationär angeordneten Messeinrichtungen wie beispielsweisen Manometern. Bei dieser Lösung sind die Messgeräte jedoch andauernd äußeren Einflüssen ausgesetzt, wodurch die Messgenauigkeit beeinträchtigt werden kann. Zudem beanspruchen diese Messgeräte erheblichen Bauraum. Hierzu wird in der WO 2010/069707 A1 vorgeschlagen, das Sensormodul zur Druckmessung mit einem RFID-Transponder zu verbinden, der über ein externes Lesegerät, das mit einer RFID-Schnittstelle verbunden ist, mit Energie versorgbar sowie auslesbar ist.

Hier will die Erfindung Abhilfe schaffen. Der Erfindung liegt die Aufgabe zu Grunde, eine Vorrichtung zur Erfassung von Drücken in einer Fluidleitung bereitzustellen, die eine einfache und effektive Messung von Drücken ermöglicht. Gemäß der Erfindung wird diese Aufgabe durch eine Vorrichtung mit den Merkmalen des Patentanspruchs 1 gelöst.

Mit der Erfindung ist eine Vorrichtung zur Erfassung von Drücken in einer Fluidleitung geschaffen, welche eine einfache und effektive Druckmessung einer Fluidleitung, insbesondere einer Hydraulikleitung ermöglicht. Durch das Vorsehen eines mit der Fluidleitung dauerhaft verbindbare Gehäuseteils mit einem Messkanal, in dem ein Sensormodul zur Druckmessung eingebracht ist, ist eine permanente Messung des anliegenden Drucks ermöglicht. Durch Verbindung des Sensormoduls mit einem Sendemodul zum drahtlosen Transfer der von dem Sensormodul erfassten Messdaten ist ein aufwendiger mechanischer Anschluss eines Datenerfassungsgerätes nicht erforderlich. Dabei ist das Sensormodul zur drahtlosen Stromversorgung des Sensormoduls eingerichtet, wodurch das Vorsehen einer Stromquelle innerhalb der Vorrichtung entfällt.

Unter dem Begriff "Fluidleitung" bzw. "Hydraulikleitung" ist vorliegend jedwede Stelle eines Hydrauliksystems zu verstehen, die zur Messung eines Fluid- bzw. Hydraulikdrucks geeignet ist, so beispielsweise auch Messstellen, welche direkt an Ventilblöcken o.ä. angeordnet sind.

Das Sensormodul umfasst einen passiven Transponder, wobei ein Lesegerät vorgesehen ist, dass eine Antenne zur Erzeugung eines elektromagnetischen Feldes aufweist. Das durch das Lesegerät erzeugte elektrische Feld indiziert in dem passiven Transponder einen elektrischen Strom, dass der Sensormodul mit der erforderlichen Energie versorgt wird. Zugleich wird die von dem Lesegerät übertragende Energie von dem Transponder genutzt, um die von dem Sensormodul erfassten Messdaten an das Lesegerät zu senden.

Das Gehäuseteil ist an seinem dem Messkanal gegenüberliegenden Ende mit einer Verschlusskappe versehen, die bevorzugt lösbar an dem Gehäuseteil befestigt ist, wodurch ein einfacher Zugang zu den Komponenten der Vorrichtung ermöglicht ist, wodurch gegebenenfalls erforderliche Reparaturen vereinfacht sind.

Dabei ist der Transponder auf einer Platine angeordnet, welche innerhalb der Verschlusskappe positioniert ist. Hierdurch ist ein einfacher Austausch des Transponders im Falle eines Defektes ermöglicht.

Dabei ist die Verschlusskappe aus Kunststoff, vorzugsweise einem Elastomerkunststoff ausgebildet, wodurch eine weitere Erhöhung der Sendeleistung erzielt ist.

Bevorzugt ist die mit dem Transponder versehene Platine derart in der Verschlusskappe positioniert, dass sie oberhalb der der Verschlusskappe zugewandten Oberseite des Gehäuseteils angeordnet ist. Hierdurch ist die Sendeleistung des Transponders optimiert.

In Weiterbildung der Erfindung ist das Sensormodul mit einer metallischen Druckmembran versehen. Hierdurch ist eine exakte Druckmessung auch unter kontinuierlicher Druckbeaufschlagung gewährleistet.

Bevorzugt ist das Gehäuseteil mit einem Gewinde zur Schraubverbindung mit einer Fluidleitung versehen. Hierdurch ist eine einfache Installation der Vorrichtung erzielt.

In weiterer Ausgestaltung der Erfindung ist das Sensormodul zusätzlich zur Temperaturmessung eingerichtet. Hierdurch ist eine gleichzeitige Erfassung von Druck und Temperatur mit entsprechender Übermittlung an das Lesegerät über das Sendemodul ermöglicht.

In Weiterbildung der Erfindung ist das Sensormodul mit einer innerhalb des Gehäuseteils angeordneten Sensorplatine zur Signalvorverarbeitung verbunden. Hierdurch ist eine integrierte Aufarbeitung und/oder Verstärkung der über das Sensormodul erfassten Messdaten erzielt.

In weiterer Ausgestaltung der Erfindung weist die Verschlusskappe wenigstens eine Rastnase auf, die in eine in dem Gehäuseteil angeordnete Rastnut eingreift. Hierdurch ist eine einfache Montage der Verschlusskappe erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

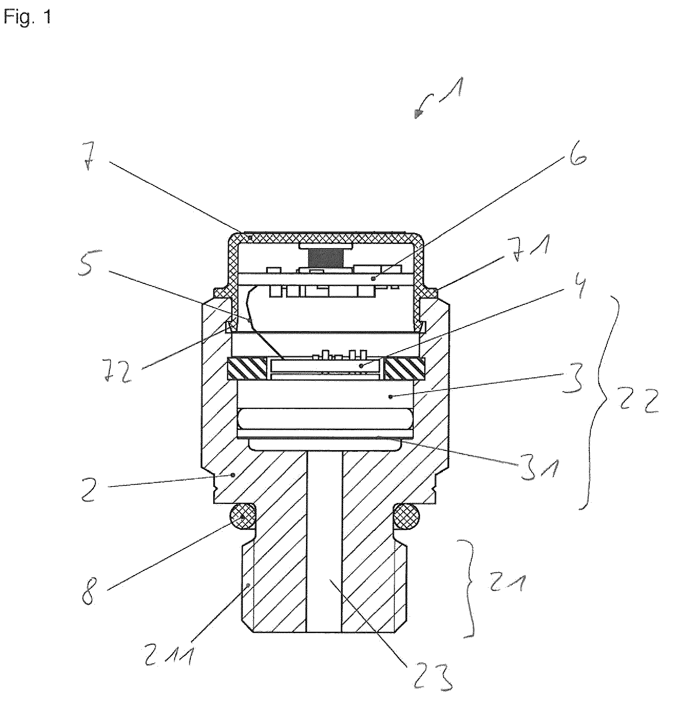

- Figur 1: die schematische Darstellung einer Vorrichtung zur Erfassung von Drücken in einer Fluidleitung und

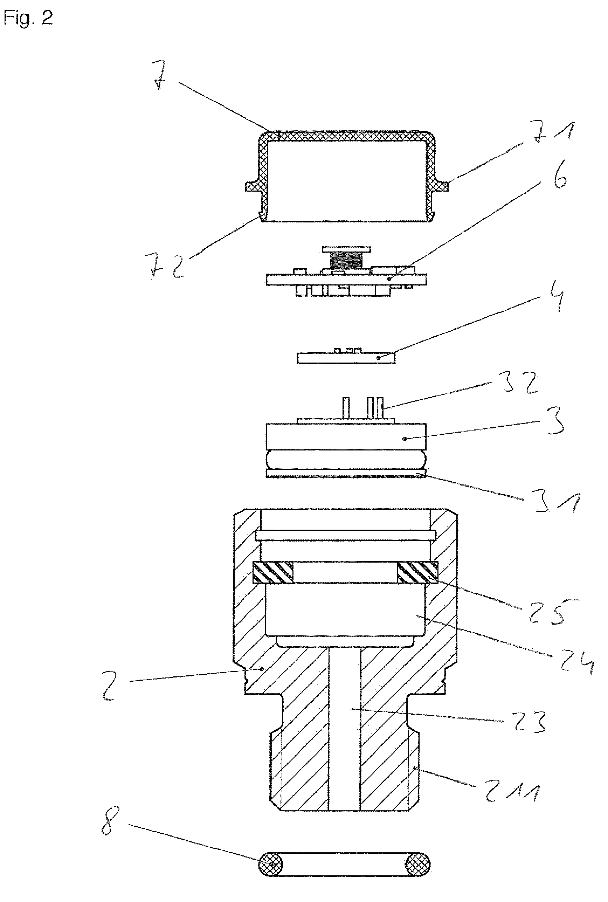

- Figur 2: die Vorrichtung aus Figur 1 in Explosionsdarstellung.

Die als Ausführungsbeispiel gewählte Vorrichtung ist in Form eines Messstopfens 1 ausgebildet. Der Messstopfen 1 umfasst im Wesentlichen ein Gehäuseteil 2 mit einem Messkanal 23, in dem ein Sensormodul 3 eingebracht ist, das über eine Sensorplatine 4 mit einer Transponderplatine verbunden ist, die innerhalb einer Verschlusskappe 7 angeordnet ist, die an dem Gehäuseteil 2 lösbar befestigt ist.

Das Gehäuseteil 2 ist im Wesentlichen zylinderförmig ausgebildet. An seinem der Verschlusskappe 7 entgegengesetzten Ende ist ein mit einem Außengewinde 211 versehener Befestigungsabschnitt 22 angeordnet, der in einen durchmesservergrößerten Abschnitt 22 übergeht, dessen Mantelfläche in Form eines Außensechskants ausgebildet ist. Durch den Befestigungsabschnitt 21 ist axial ein Messkanal 23 geführt, der in eine innerhalb des durchmesservergrößerten Abschnitts 23 angeordnete Messkammer 24 mündet, welche das Sensormodul 3 aufnimmt. Zur Fixierung des Sensormoduls 3 ist in der Messkammer 24 ein Fixierring 25 eingebracht, durch den die mit dem Sensormodul 3 über Kontakte 32 verbundene Sensorplatine 4 hindurchragt. Das Sensormodul 3 ist an seiner dem Messkanal 23 zugewandten Seite mit einer metallischen Druckmembran 31 versehen. Oberhalb des Fixierrings 25 ist in dem Gehäuseteil 2 innen eine umlaufende Nut 26 eingebracht. Außen ist oberhalb des Außengewindes 211 an dem Befestigungsabschnitt 21 ein O-Ring 8 zur Abdichtung des Messtopfens 1 gegenüber der Fluidleitung, in welche der Messstopfen eingeschraubt wird, angeordnet. Die Verschlusskappe 7 ist im Ausführungsbeispiel als topfförmiges Kunststoffspritzgießteil ausgebildet. Außen ist an die Verschlusskappe 7 umfassend ein flanschartiger Steg 71 angeformt. An ihren dem Gehäuseteil 2 zugewandten Ende ist die Verschlusskappe 7 mit einer umlaufenden Rastnase 72 versehen, welche im montierten Zustand in die Nut 26 des Gehäuseteils 2 eingreift, wobei der flanschartige Steg 71 auf dem oberen Rand des Gehäuseteils 2 aufliegt. Die Verschlusskappe 7 ist so rastend mit dem Gehäuseteil 2 verbunden. Innerhalb der topfförmig ausgebildeten Verschlusskappe 7 ist eine mit einem Transponder versehene Transponderplatine 6 angeordnet, die oberhalb der der Verschlusskappe 7 zugewandten Oberseite des Gehäuseteils 2 positioniert ist. Die Transponderplatine 6 ist über eine elektrische Leitung 5 mit der innerhalb des Gehäuseteils 2 angeordneten Sensorplatine 4 verbunden, die der Signalvorverarbeitung sowie der Stromversorgung des Sensormoduls 3 dient.

Der Messstopfen 1 wird dauerhaft an einer Druckmessstelle einer Fluidleitung, insbesondere einer Hydraulikleitung mittels seines Außengewindes 211 fixiert, wobei die Dichtigkeit zwischen dem Messstopfens 1 und der Druckmessstelle durch den O-Ring 8 gewährleistet ist. Das Fluid strömt dauerhaft in den Messkanal 23 des Gehäuseteils 2, wodurch die metallische Druckmembran 31 des Sensormoduls 3 mit Druck beaufschlagt wird. Zum Auslesen des anliegenden Drucks wird über ein Lesegerät ein elektrisches Feld generiert, welches von der Transponderplatine 6 in elektrischen Strom umgewandelt wird. Die erzeugte Energie wird durch die Leitung 5 an die Sensorplatine 4 weitergeleitet. Die rückgekoppelten Messdaten des Sensormoduls 3 werden wiederum von der Transponderplatine 6 in ein elektrisches Feld umgewandelt, welches vom Lesegerät ausgewertet wird. Im Ausführungsbeispiel sind Transponderplatine und Lesegerät nach dem RFID-Standard ausgebildet. Die auf diese Weise ausgelesenen Messwerte werden im Speicher des - nicht dargestellten - Lesegeräts abgelegt. Anhand eines auf der Transponderplatine 6 hinterlegten eindeutigen Identifizierungscodes, der bei jeder Messung zusammen mit den Messdaten an das Lesegerät übergeben wird, ist eine Zuordnung von ausgelesenen Messdaten zu einem jeweiligen Messstopfen ermöglicht.

In einer alternativen Ausgestaltung eines solchen Messstopfens kann anstelle der Transponderplatine auch ein Sender nach dem W-LAN oder ZigBee-Standard angeordnet werden. Hierdurch ist ein Versenden von Messdaten auch über größere Entfernungen möglich. Die Anordnung eines solchen Senders erfordert jedoch die zusätzliche Anordnung einer Stromquelle, beispielsweise eines Akkus, der innerhalb des Messstopfens angeordnet ist. Die Aufladung dieses Akkus wäre beispielsweise über elektromagnetische Induktion möglich.

In dem zuvor beschriebenen Ausführungsbeispiel sind die Komponenten innerhalb des Gehäuseteils 2 mechanisch fixiert. Dabei wird das Sensormodul 3, was im Ausführungsbeispiel zusätzlich mit einem Temperatursensor versehen ist, von oben in das Gehäuseteil 2 eingepresst und anschließend über den Fixierring 25 mechanisch fixiert. Durch die mechanische Fixierung sämtlicher Komponenten ist ein nachträglicher Austausch einzelner Komponenten zur Reparaturzwecken ermöglicht. Alternativ oder zusätzlich können auch sämtliche Komponenten in einer Kunststoffmasse eingebettet sein, welche die Messkammer 24 des Gehäuseteils 2 ausfüllt. Dabei kann gleichzeitig die Transponderplatine derart mitvergossen sein, dass durch die Kunststoffausfüllung integriert eine Verschlusskappe gebildet ist.

## Patentansprüche

1. Vorrichtung zur Erfassung von Drücken in einer Fluidleitung, insbesondere in einer Hydraulikleitung, umfassend eine mit einer Fluidleitung verbindbares Gehäuseteil (2) mit einem Messkanal (23), in dem ein Sensormodul (3) zur Druckmessung eingebracht ist, dass mit einem Sendemodul zum drahtlosen Transfer der von dem Sensormodul (3) erfassten Messdaten verbunden ist, wobei die Vorrichtung zur externen drahtlosen Stromversorgung des Sensormoduls (3) eingerichtet ist und wobei das Sendemodul einen passiven Transponder umfasst, der über ein Lesegerät, das eine Antenne zur Erzeugung eines elektromagnetischen Feldes aufweist, auslesbar und mit Energie versorgbar ist, **dadurch gekennzeichnet, dass** das Gehäuseteil (2) an seinem dem Messkanal (23) gegenüberliegenden Ende mit einer Verschlusskappe (7) versehen ist, wobei der Transponder auf einer Platine (6) angeordnet ist, welche innerhalb der Verschlusskappe (7) angeordnet ist, wobei die Verschlusskappe (7) aus Kunststoff ausgebildet ist.

2. Vorrichtung nach Anspruch 1, **dadurch gekennzeichnet, dass** das Sensormodul (3) mit einer metallischen Druckmembran (31) versehen ist.

3. Vorrichtung nach Anspruch 1 oder 2, **dadurch gekennzeichnet, dass** das Gehäuseteil (2) mit einem Gewinde (211) zur Schraubverbindung mit einer Druckmessstelle einer Fluidleitung versehen ist.

4. Vorrichtung nach einem der vorgenannten Ansprüche, **dadurch gekennzeichnet, dass** das Sensormodul (3) zusätzlich zur Temperaturmessung eingerichtet ist.

5. Vorrichtung nach einem der vorgenannten Ansprüche, **dadurch gekennzeichnet, dass** die mit dem Transponder versehene Platine (6) derart in der Verschlusskappe (7) positioniert ist, dass sie oberhalb der der Verschlusskappe (7) zugewandten Oberseite des Gehäuseteils (2) angeordnet ist.

6. Vorrichtung nach einem der vorgenannten Ansprüche, **dadurch gekennzeichnet, dass** das Sensormodul (3) mit einer innerhalb des Gehäuseteils (2) angeordneten zur Signalvorverarbeitung eingerichteten Sensorplatine (4) verbunden ist.

7. Vorrichtung nach einem der vorgenannten Ansprüche, **dadurch gekennzeichnet, dass** die Verschlusskappe (7) lösbar an dem Gehäuseteil (2) befestigt ist.

8. Vorrichtung nach Anspruch 7, **dadurch gekennzeichnet, dass** die Verschlusskappe (7) wenigstens eine Rastnase (72) aufweist, die in eine ing dem Gehäuseteil (2) angeordnete Rastnut (26) eingreift.

9. Vorrichtung nach einem der vorgenannten Ansprüche, **dadurch gekennzeichnet, dass** das Gehäuseteil (2) außen bereichsweise als Außensechskant ausgebildet ist.

## Claims

1. Pressure-sensing device in a fluid line, particularly in a hydraulic line, comprising a housing part (2) with a measuring channel (23) connectable to a fluid line, in which a sensor module (3) for pressure measurement is inserted, which is connected to a transmission module for the wireless transfer of the measurement data collected by the sensor module (3), wherein the device is adapted for external wireless power supply of the sensor module and wherein the transmission module comprises a passive transponder, which can be read and supplied with energy by way of a reader, which has an antenna for generating an electromagnetic field, **characterised in that** the housing part (2) is provided with a cap (7) at its end opposite the measuring channel (23), wherein the transponder is arranged on a board (6), which is arranged inside the cap (7), wherein the cap (7) is made of plastic.

2. Device according to claim 1, **characterised in that** the sensor module (3) is provided with a metallic pressure membrane (31).

3. Device according to claim 1 or 2, **characterised in that** the housing part (2) is provided with a thread (211) for threaded connection with a pressure measuring point of a fluid line.

4. Device according to one of the previous claims, **characterised in that** the sensor module (3) is additionally adapted for temperature measurement.

5. Device according to one of the previous claims, **characterised in that** the board (6) provided with the transponder is positioned in the cap (7) in a manner that it is arranged above the upper side of the housing part (2) facing the cap (7).

6. Device according to one of the previous claims, **characterised in that** the sensor module (3) is connected to a sensor board (4) for signal pre-processing arranged inside the housing part (2).

7. Device according to one of the previous claims, **characterised in that** the cap (7) is detachably fastened to the housing part (2).

8. Device according to claim 7, **characterised in that** the cap (7) has at least one latching lug (72), which engages in a latching groove (26) arranged in the housing part (2).

9. Device according to one of the previous claims, **characterised in that** the housing part (2) is externally partially designed as an external hexagon.

## Revendications

1. Dispositif d'enregistrement de pressions dans une conduite de fluide, notamment une conduite hydraulique, comprenant un boîtier (2) reliable à une conduite de fluide et équipé d'un canal de mesure (23), dans lequel est logé un module capteur (3) destiné à mesurer la pression et qui est relié avec un module émetteur pour transférer sans fil les données de mesure enregistrées par le module capteur (3), sachant que le dispositif est configuré pour alimenter électriquement, sans fil, le module capteur (3) et sachant que le module émetteur comprend un transpondeur passif dont il est possible de lire le contenu via un lecteur présentant une antenne génératrice d'un champ magnétique, et que ce transpondeur peut être alimenté en énergie, **caractérisé en ce que** le boîtier (2) est muni, en son extrémité opposée au canal de mesure (23), d'une coiffe obturatrice (7), sachant que le transpondeur est agencé sur une carte (6) elle-même située dans la coiffe obturatrice (7), sachant que la coiffe obturatrice (7) est en matière plastique.

2. Dispositif selon la revendication 1, **caractérisé en ce que** le module capteur (3) est doté d'une membrane métallique (31) sous pression.

3. Dispositif selon la revendication 1 ou 2, **caractérisé en ce que** le boîtier (2) comporte un filetage (211) permettant d'établir une jonction par vis avec la capsule manométrique d'une conduite de fluide

4. Dispositif selon l'une des revendications précédentes, **caractérisé en ce que** le module capteur (3) est configuré en plus pour mesurer la température.

5. Dispositif selon l'une des revendications précédentes **caractérisé en ce que** la carte (6) équipée du transpondeur est positionnée dans la coiffe obturatrice (7) de sorte à être agencée au-dessus du côté supérieur du boîtier (2) regardant la coiffe obturatrice (7).

6. Dispositif selon l'une des revendications précédentes, **caractérisé en ce que** le module capteur (3) est relié avec une carte à capteur (4) agencée à l'intérieur du boîtier (2) et configurée pour traiter les signaux.

7. Dispositif selon l'une des revendications précédentes, **caractérisé en ce que** la coiffe obturatrice (7) est fixée de manière détachable contre le boîtier (2).

8. Dispositif selon la revendication 7, **caractérisé en ce que** la coiffe obturatrice (7) présente au moins une saillie de crantage (72) qui engrène dans une encoche (26) agencée dans le boîtier (2).

9. Dispositif selon l'une des revendications précédentes, **caractérisé en ce que** l'extérieur du boîtier (2) est configuré localement en forme d'hexagone.
